# EUROPEAN PATENT APPLICATION

(11) **EP 4 557 659 A1**
(43) Date of publication of application: **21.05.2025**
(21) Application number: 23839197.3
(22) Date of filing: 13.02.2023
(51) Int. Cl.: H04L 9/08, G06F 21/32, G06F 21/64, H04L 9/32

(54) **MESSAGE PRESENTATION SYSTEM, PRESENTATION DEVICE, AND MESSAGE PRESENTATION METHOD**

(30) Priority: 12.07.2022 JP 2022111731
(71) Applicant: Hitachi, Ltd., Tokyo 100-8280 (JP)
(72) Inventor: NAKAMURA Wataru, Tokyo 100-8280 (JP); TAKAHASHI Kenta, Tokyo 100-8280 (JP)
(74) Representative: Mewburn Ellis LLP
(86) International application number: PCT/JP2023/004824
(87) International publication number: WO 2024/014017

(57) **Abstract**

A presentation apparatus stores a template generated based on registration biometric information for a user, an encrypted message, and an issuance proof generated based on a user's public key corresponding to the template, a message, and an issuer's secret key corresponding to an issuance entity of the message, restores the message from the encrypted message using a user's secret key generated based on the template and the presentation biometric information for the user, generates a partial message from the message based on a presentation part that is information for identifying a part presented in the message, generates a presentation proof based on the presentation part, the issuance proof, and the user's secret key, and outputs the partial message and the presentation proof.

## Description

### CROSS-REFERENCE TO RELATED APPLICATION

Priority is claimed on Japanese Patent Application No. 2022-111731, filed July 12, 2022, the content of which is incorporated herein by reference.

### Technical Field

The present invention relates to a message presentation system, a presentation apparatus, and a message presentation method.

### Background Art

Systems have been known in which users receive electronic messages and data for proving content of the messages (issuance proof) from issuers, and the users present some or all of messages and data for proving the reception of issuance from the issuers (presentation proof) to verifiers who are third parties to verify the reception.

For example, NPL 1 discloses a system in which an issuer issues data called a verifiable credenial including a message called a claim and an issuance proof, and a user (called an owner in NPL 1) who received the issued data presents, to a verifier, data called a verifiable presentation including the verifiable credential and a presentation proof.

The user preferably presents only a part of the issued message (partial message) and conceals the remaining part. As a method of executing such selective presentation, NPL 1 discloses a method in which an issuer generates an electronic signature for a message and includes the electronic signature in an issuance proof, and a user includes zero knowledge proof for the electronic signature in a presentation proof. As another method of executing selective presentation, NPL 2 discloses an anonymous credentials system (ACS).

### Citation List

### Non Patent Literature

NPL 1: W3C, "Verifiable Credentials Data Model v1.1," November 9, 2021 [retrieved on February 4, 2022], Internet
NPL 2: Olivier Sanders, "Efficient redactable signature and application to anonymous credentials," January 28, 2020 [retrieved on February 4, 2022], Internet

### Summary of Invention

### Technical Problem

In the methods disclosed in NPL 1 and NPL 2, safety threats arise when data stored by users is leaked. For example, in the method disclosed in NPL 1, a user is required to store a message and an issuance proof. When the issuance proof among the stored data is leaked, a threat that a person other than the user impersonates the user and presents the issuance proof may arise.

In the method disclosed in NPL 2, a user is required to store a user's secret key, a message, and an issuance proof. When a user's secret key among the stored data is leaked to a verifier who received a set of a partial message and a presentation proof for the partial message, a threat that the verifier impersonates the user and presents the user's secret key to another verifier may arise.

In either NPL 1 or NPL 2, when a message is leaked, a part of the message that was not presented may be known to a verifier or a third party.

Accordingly, according to an aspect of the present invention, a message presentation system capable of maintaining safety even when data stored by a user can be leaked is implemented.

### Solution to Problem

To solve the foregoing problem, according to an aspect of the present invention, the following configuration is adopted. A message presentation system includes a presentation apparatus. The presentation apparatus stores a template generated based on registration biometric information for a user, an encrypted message in which a message including one or more message elements are encrypted, and an issuance proof generated based on a user's public key corresponding to the template, the message, and an issuer's secret key corresponding to an issuance entity of the message, acquires presentation biometric information for the user, generates a user's secret key corresponding to the user's public key based on the template and the presentation biometric information, restores the message by decrypting the encrypted message using the user's secret key, generates a partial message from the message based on a presentation part that is information for identifying a part to be presented in the message, generates a presentation proof based on the presentation part, the issuance proof, and the user's secret key, and outputs the partial message and the presentation proof.

### Advantageous Effects of Invention

According to an aspect of the present invention, a message presentation system capable of maintaining safety even when data stored by a user can be leaked is implemented.

Other problems, configurations, and effects will be apparent from description of the following embodiments.

### Brief Description of Drawings

[Fig. 1A] Fig. 1A is a block diagram illustrating a configuration example of a message presentation system according to a first embodiment.
[Fig. 1B] Fig. 1B is a block diagram illustrating a functional configuration example of an issuer registration apparatus according to the first embodiment.
[Fig. 1C] Fig. 1C is a block diagram illustrating a functional configuration example of a user registration apparatus according to the first embodiment.
[Fig. 1D] Fig. 1D is a block diagram illustrating a functional configuration example of a verifier registration apparatus according to the first embodiment.
[Fig. 1E] Fig. 1E is a block diagram illustrating a functional configuration example of an issuance apparatus according to the first embodiment.
[Fig. 1F] Fig. 1F is a block diagram illustrating a functional configuration example of an acquisition apparatus according to the first embodiment.
[Fig. 1G] Fig. 1G is a block diagram illustrating a functional configuration example of a presentation apparatus according to the first embodiment.
[Fig. 1H] Fig. 1H is a block diagram illustrating a functional configuration example of a verification apparatus according to the first embodiment.
[Fig. 1I] Fig. 1I is a block diagram illustrating a functional configuration example of a log output apparatus according to the first embodiment.
[Fig. 2] Fig. 2 is a block diagram illustrating a hardware configuration example of a computer configuring each apparatus included in the message presentation system according to the first embodiment.
[Fig. 3] Fig. 3 is a sequence diagram illustrating an example of an issuer registration process according to the first embodiment.
[Fig. 4] Fig. 4 is a sequence diagram illustrating an example of a user registration process according to the first embodiment.
[Fig. 5] Fig. 5 is a sequence diagram illustrating an example of a verifier registration process according to the first embodiment.
[Fig. 6] Fig. 6 is a sequence diagram illustrating an example of an issuance process according to the first embodiment.
[Fig. 7] Fig. 7 is a sequence diagram illustrating an example of a presentation process according to the first embodiment.
[Fig. 8] Fig. 8 is a sequence diagram illustrating an example of a log output process according to the first embodiment.
[Fig. 9] Fig. 9 is a flowchart illustrating an example of transition of a display screen of the presentation apparatus during the presentation process according to the first embodiment.

### Description of Embodiments

Hereinafter, embodiments of the present invention will be described in detail with reference to the drawings. Note that the embodiments are merely examples for implementing the present invention and should not be construed as limiting the technical scope of the present invention.

### First Embodiment

In a first embodiment, a message presentation system via a network will be described. A message is arbitrary data expressed electronically. For example, a driver's license, a Japanese national ID card, an employment history certificate, an educational background certificate, a course completion certificate, a vaccination certificate, a purchase history, a credit card usage history, an employee ID card, a student ID card, and a membership card that are electronically expressed are all examples of a message. Hereinafter, all messages will be assumed to be electronically expressed and "electronically expressed" will be omitted.

A message includes, for example, one or more message elements. The message elements are, for example, units that can be partially presented. For example, M1 := (name: Taro Hitachi, date of birth: January 1, 2000, gender: male, address: 1-6-6 Marunouchi, Chiyoda-ku, Tokyo) is an example of a message. Note that A1 := A2 indicates that A1 is defined by A2. M1 includes four message elements: "name: Taro Hitachi", "date of birth: January 1, 2000", "gender: male", and "address: 1-6-6 Marunouchi, Chiyoda-ku, Tokyo" partitioned by ",".

A method of defining message elements is not limited to the above. For example, M2 := (family name: Hitachi, first name: Taro, date of birth: January 1, 2000, gender: male, address of prefecture: Tokyo, address of city and remainder: 1-6-6 Marunouchi, Chiyoda-ku) is also an example of a message.

Information for identifying "a part to be presented in a presentation process in the message" is called a presentation part and a set of message elements corresponding to the presentation part in the message is called a partial message. For example, when a presentation part is (name, date of birth) in the above M1, a partial message corresponding to the presentation part is (name: Taro Hitachi, date of birth: January 1, 2000).

Information indicating what each message element means is called a key and information itself is called a value. For example, in the message element "name: Taro Hitachi", a key is "name" and a value is "Taro Hitachi".

As a structure of a message, each message element may be formed from a set of a key and a value as the foregoing M1, each message element may be formed of a value, and structure information may be defined separately as follows. For example, M3 is defined by values only like M3 := (Taro Hitachi, January 1, 2000, male, 1-6-6 Marunouchi, Chiyoda-ku, Tokyo) and a structure information S3 is defined by keys like S3 := (name, date of birth, gender, address). By referring to the keys of the structure information S3 corresponding to positions of the message elements of the message M3, it is possible to understand what each message element means.

When each message element is formed of a value, the structure information may be transmitted, encrypted, and decrypted together with, for example, a message or a partial message. Here, the structure information may be processed to be associated with the message or the partial message. For example, a signature target included in an issuance proof may include structure information. Alternatively, the structure information may be stored in a public database (DB) that is difficult to falsify (for example, a blockchain, a DB of a trusted organization, or the like) and a pointer to a storage location may be included in a signature target included in an issuance proof.

Alternatively, a system may define a rule that structure information is stored in a predetermined location of a message and the structure information is necessarily presented at the time of presentation. For example, when a rule that a first message indicates structure information is defined, M4 := (S3, Taro Hitachi, January 1, 2000, male, 1-6-6 Marunouchi, Chiyoda-ku, Tokyo) is an example of a message.

Information regarding a message such as a name of a message ("driver's license" or the like), an issuer name, and a valid period may be attached to the message. Here, in a presentation process, presentation is executed only when the valid period attached to the message is not expired. The process may be stopped when the valid period is expired.

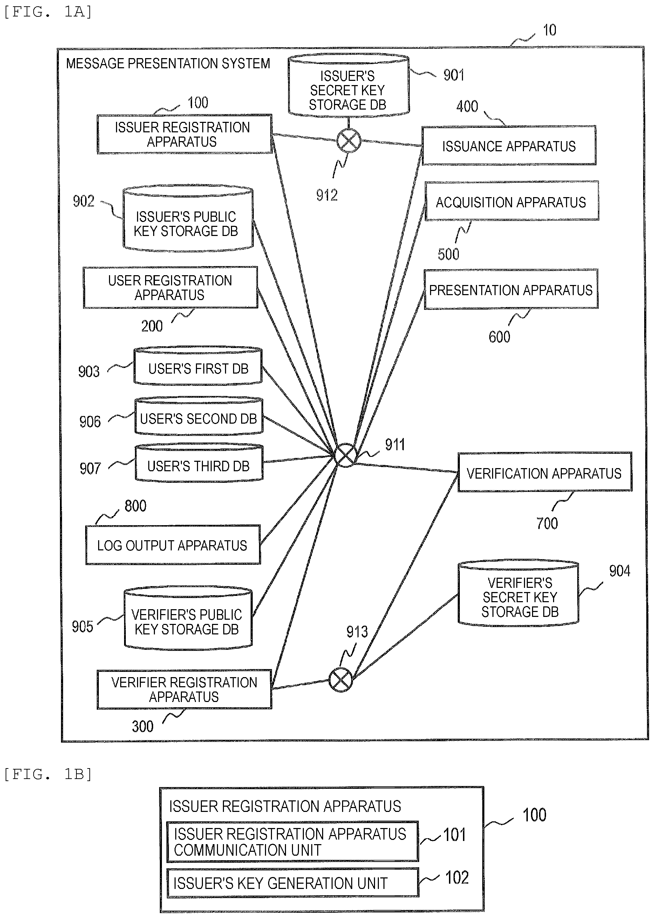

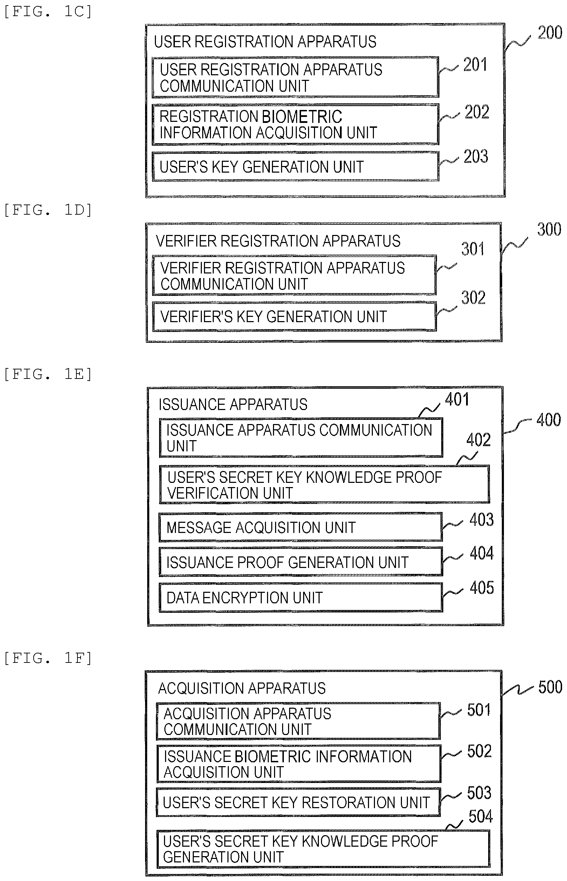

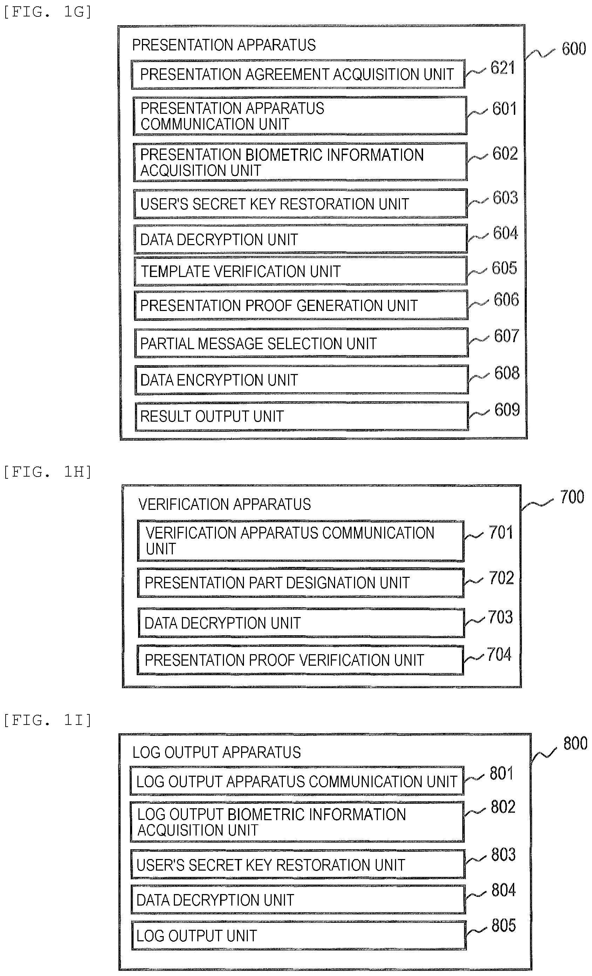

Fig. 1A is a block diagram illustrating a configuration example of a message presentation system. Fig. 1B is a block diagram illustrating a functional configuration example of an issuer registration apparatus 100. Fig. 1C is a block diagram illustrating a functional configuration example of a user registration apparatus 200. Fig. 1D is a block diagram illustrating a functional configuration example of a verifier registration apparatus 300. Fig. 1E is a block diagram illustrating a functional configuration example of an issuance apparatus 400. Fig. 1F is a block diagram illustrating a functional configuration example of an acquisition apparatus 500. Fig. 1G is a block diagram illustrating a functional configuration example of a presentation apparatus 600. Fig. 1H is a block diagram illustrating a functional configuration example of a verification apparatus 700. Fig. 1I is a block diagram illustrating a functional configuration example of a log output apparatus 800.

A message presentation system 10 includes, for example, the issuer registration apparatus 100, the user registration apparatus 200, the verifier registration apparatus 300, the issuance apparatus 400, the acquisition apparatus 500, the presentation apparatus 600, the verification apparatus 700, the log output apparatus 800, an issuer's secret key storage DB 901, an issuer's public key storage DB 902, a user's first DB 903, a verifier's secret key storage DB 904, a verifier's public key storage DB 905, a user's second DB 906, and a user's third DB 907.

For example, the issuer registration apparatus 100, the user registration apparatus 200, the verifier registration apparatus 300, the issuance apparatus 400, the acquisition apparatus 500, the presentation apparatus 600, the verification apparatus 700, the log output apparatus 800, the issuer's public key storage DB 902, the user's first DB 903, the verifier's public key storage DB 905, the user's second DB 906, and the user's third DB 907 are connected to a network 911.

For example, the issuer registration apparatus 100, the issuance apparatus 400, and the issuer's secret key storage DB 901 are connected to a network 912. For example, the verifier registration apparatus 300, the verification apparatus 700, and the verifier's secret key storage DB 904 are connected to a network 913.

The Internet, local networks in organizations, and the like are all examples of the networks 911, 912, and 913. Each of the networks 911, 912, and 913 may be wired or wireless.

In the example of Fig. 1A, networks connected to apparatuses in the message presentation system 10 include the networks 912, 912, and 913, but the present invention may not necessarily be limited to such configuration. For example, there may be only one of the network 911, the network 912, or the network 913, and all the apparatuses included in the message presentation system 10 may be connected to the one network.

Here, when an issuer's secret key is communicated, it is preferable to take countermeasures against leakage of the issuer's secret key to prevent illegal use of the issuer's secret key. Authentication between apparatuses executing the communication is an example of the countermeasure. Similarly, to prevent illegal use of a verifier's secret key, it is preferable to take countermeasures against use of the verifier's secret key in an apparatus other than the verification apparatus 700.

The issuer registration apparatus 100 includes, for example, an issuer registration apparatus communication unit 101 and an issuer's key generation unit 102 that are both functional units. The issuer registration apparatus communication unit 101 communicates with apparatuses connected to the issuer registration apparatus 100. The issuer's key generation unit 102 generates an issuer's secret key and an issuer's public key of an issuance entity that issues a message and an issuance proof (data for proving content of the message) to a user.

The user registration apparatus 200 includes, for example, a user registration apparatus communication unit 201, a registration biometric information acquisition unit 202, and a user's key generation unit 203 that are all functional units. The user registration apparatus communication unit 201 communicates with apparatuses connected to the user registration apparatus 200. The registration biometric information acquisition unit 202 acquires registration biometric information. The user's key generation unit 203 generates a set of a template and a user's public key from the registration biometric information.

The verifier registration apparatus 300 includes, for example, a verifier registration apparatus communication unit 301 and a verifier's key generation unit 302 that are both functional units. The verifier registration apparatus communication unit 301 communicates with apparatuses connected to the verifier registration apparatus 300. The verifier's key generation unit 302 generates a verifier's secret key and a verifier's public key.

The issuance apparatus 400 includes, for example, an issuance apparatus communication unit 401, a user's secret key knowledge proof verification unit 402, a message acquisition unit 403, an issuance proof generation unit 404, and a data encryption unit 405 that are all functional units.

The issuance apparatus communication unit 401 communicates with apparatuses connected to the issuance apparatus 400. The user's secret key knowledge proof verification unit 402 executes user's secret key knowledge verification using a user's secret key knowledge proof to be described below and the user's public key. The message acquisition unit 403 acquires a message. The issuance proof generation unit 404 generates an issuance proof using the user's public key, the issuer's secret key, and the message. The data encryption unit 405 encrypts the message using the user's public key.

The acquisition apparatus 500 includes, for example, an acquisition apparatus communication unit 501, an issuance biometric information acquisition unit 502, a user's secret key restoration unit 503, and a user's secret key knowledge proof generation unit 504 that are all functional units. The acquisition apparatus communication unit 501 communicates with apparatuses connected to the acquisition apparatus 500. The issuance biometric information acquisition unit 502 acquires issuance biometric information. The user's secret key restoration unit 503 restores the user's secret key using the template and the issuance biometric information. The user's secret key knowledge proof generation unit 504 generates a user's secret key knowledge proof using the restored user's secret key.

The presentation apparatus 600 includes, for example, a presentation agreement acquisition unit 621, a presentation apparatus communication unit 601, a presentation biometric information acquisition unit 602, a user's secret key restoration unit 603, a data decryption unit 604, a template verification unit 605, a presentation proof generation unit 606, a partial message selection unit 607, a data encryption unit 608, and a result output unit 609 that are all functional units.

The presentation agreement acquisition unit 621 acquires an agreement of a user about presentation of a partial message to be described below. The presentation apparatus communication unit 601 communicates with apparatuses connected to the presentation apparatus 600. The presentation biometric information acquisition unit 602 acquires presentation biometric information. The user's secret key restoration unit 603 restores the user's secret key using the template and the presentation biometric information. The data decryption unit 604 decrypts the encrypted message using the restored user's secret key.

The template verification unit 605 executes a verification process on the template. The presentation proof generation unit 606 generates a presentation proof (data for proving that a message that is a selection source of a partial message to be presented was issued from the issuer) for a presentation part of the decrypted message using the issuance proof and the user's secret key. The partial message selection unit 607 selects a presentation part included in the decrypted message and generates a partial message. The data encryption unit 608 encrypts the partial message using the verifier's public key. The data encryption unit 608 encrypts a log related to the presentation apparatus 600 using the user's public key. The result output unit 609 outputs a verification result for the presentation proof by the verification apparatus 700.

The verification apparatus 700 includes, for example, a verification apparatus communication unit 701, a presentation part designation unit 702, a data decryption unit 703, and a presentation proof verification unit 704 that are all functional units. The verification apparatus communication unit 701 communicates with apparatuses connected to the verification apparatus 700. The presentation part designation unit 702 designates a part that is a presentation target in the message. The data decryption unit 703 decrypts the encrypted partial message using the verifier's secret key. The presentation proof verification unit 704 executes a verification process on the presentation prof using the issuer's public key and the decrypted partial message.

The log output apparatus 800 includes, for example, a log output apparatus communication unit 801, a log output biometric information acquisition unit 802, a user's secret key restoration unit 803, a data decryption unit 804, and a log output unit 805 that are all functional units.

The log output apparatus communication unit 801 communicates with apparatuses connected to the log output apparatus 800. The log output biometric information acquisition unit 802 acquires log output biometric information. The user's secret key restoration unit 803 restores the user's secret key using the template and the log output biometric information. The data decryption unit 804 decrypts the encrypted log related to the presentation apparatus 600 using the restored user's secret key. The log output unit 805 outputs the decrypted log.

The issuer's secret key storage DB 901 stores the issuer's secret key. As an example of the issuer's secret key storage DB 901, an auxiliary storage device in a personal computer (PC) is given. As another example, a physical token or an integrated circuit (IC) card is given. The issuer's secret key storage DB 901 may be included in the issuer registration apparatus 100 or the issuance apparatus 400.

The issuer's public key storage DB 902 stores the issuer's public key. As an example of the issuer's public key storage DB 902, a DB of a trustable organization, a DB of a government, a blockchain, a distributed ledger, or a decentralized database (DB) is given. It is preferable to publicize the issuer's public key storage DB 902 and make it difficult to falsify the issuer's public key storage DB 902.

The user's first DB 903, the user's second DB 906, and the user's third DB 907 store information regarding the user. For example, the user's first DB 903 stores the template and the user's public key of the user. For example, the user's second DB 906 stores the encrypted message and the issuance proof. For example, the user's third DB 907 stores the encrypted log.

The information stored in the user's first DB 903, the user's second DB 906, and the user's third DB 907 may not necessarily be divided as exemplified (that is, the foregoing information may be stored in any of the user's first DB 903, the user's second DB 906, and the user's third DB 907). The DB that stores the information regarding the user may not necessarily be divided into three DBs. For example, the three DBs may be combined into one DB. A cloud storage, a server of an organization such as a corporation, and the like are examples of the user's first DB 903, the user's second DB 906, and the user's third DB 907. Each DB may be configured by a plurality of physical devices and each piece of data may be stored separately. For example, the user's first DB 903 may be configured by a plurality of physical devices, a user's public key may be divided into a plurality of pieces, and each physical device configuring the user's first DB 903 may store each divided piece of the user's public key.

The plurality of devices may be physically included in one terminal. As an example, an issuer terminal owned by an issuance organization includes the issuer registration apparatus 100, the issuance apparatus 400, and the issuer's secret key storage DB 901. A user's individual terminal includes the user registration apparatus 200, the acquisition apparatus 500, and the presentation apparatus 600. A verifier terminal owned by a verifier includes the verifier registration apparatus 300, the verification apparatus 700, and the verifier's secret key storage DB 904.

As another example, a first issuer terminal owned by an issuance organization includes the issuer registration apparatus 100, the issuance apparatus 400, and the issuer's secret key storage DB 901. A second issuer terminal owned by the issuance organization includes the user registration apparatus 200 and the acquisition apparatus 500. A first verifier terminal owned by a verifier includes the verifier registration apparatus 300, the verification apparatus 700, and the verifier's secret key storage DB 904. A second verifier terminal owned by the verifier includes the presentation apparatus 600. In the case of the present example, although the user does not have an own terminal, a message can be acquired by executing an issuance process using the second issuer terminal owned by the issuance organization and the presentation process can be executed using the second verifier terminal owned by the verifier. In such a configuration example, the log output apparatus 800 is included in a user individual terminal or another terminal and the remaining DBs are mounted as described above, for example.

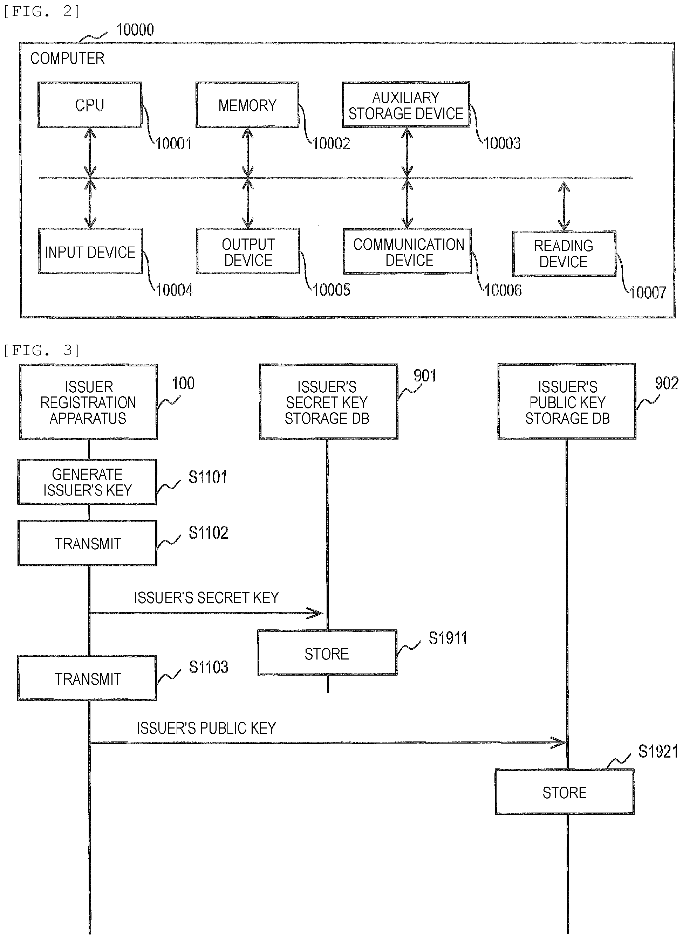

Fig. 2 is a block diagram illustrating a hardware configuration example of a computer configuring each apparatus included in the message presentation system 10 according to the first embodiment. A computer 10000 includes, for example, for example, a central processing unit (CPU) 10001, a memory 10002, an auxiliary storage device 10003, an input device 10004, an output device 10005, a communication device 10006, and a reading device 10007.

The CPU 10001 includes a processor and executes a program stored in the memory 10002. The memory 10002 includes a read only memory (ROM) that is a nonvolatile storage element and a random access memory (RAM) that is a volatile storage element. The ROM stores a permanent program (for example, a basic input/output system (BIOS)) or the like. The RAM is a high-speed and volatile storage element such as a dynamic random access memory (DRAM) and temporarily stores programs executed by the CPU 10001 and data used during execution of the programs.

The auxiliary storage device 10003 is, for example, a large-capacity and nonvolatile storage device such as a magnetic storage device (hard disk drive (HDD)) or a flash memory (solid state drive (SSD)) and stores programs executed by the CPU 10001 and data used during execution of the programs. That is, the programs are read from the auxiliary storage device 10003, loaded to the memory 10002, and executed by the CPU 10001.

The input device 10004 is a device such as a keyboard or a mouse that receives an input from an operator. The output device 10005 is a device such as a display device or a printer that outputs an execution result of the programs in a format that can be visually recognized by the operator.

The communication device 10006 is a network interface device that controls communication with other apparatuses according to a predetermine protocol. The communication device 10006 includes, for example, a serial interface such as a universal serial bus (USB).

Some or all of the programs executed by the CPU 10001 may be provided to the computer 10000 via a removable medium (a CD-ROM, a flash memory, or the like) that is a non-transitory storage medium or via a network from an external computer that includes a non-transitory storage medium, and may be stored in the nonvolatile auxiliary storage device 10003 that is a non-transitory storage medium. The reading device 10007 is an interface device that reads data from a removable medium.

Each apparatus included in the message presentation system 10 is a computer system configured on one physical computer or a plurality of logical or physical computers, and may operate as separate threads on the same computer or operate on a virtual computer constructed on a plurality of physical computer resources.

For example, the issuer registration apparatus communication unit 101 and the issuer's key generation unit 102 of the issuer registration apparatus 100 are included in the CPU 10001 of the computer 10000 that configures the issuer registration apparatus 100. For example, the CPU 10001 of the computer 10000 that configures the issuer registration apparatus 100 operates according to an issuer registration apparatus communication program loaded to the memory 10002 of the computer 10000 to function as the issuer registration apparatus communication unit 101 and operates according to an issuer's key generation program loaded to the memory 10002 to function as the issuer's key generation unit 102. The relations among the CPU 10001 of the computer 10000 that configures the apparatus, the programs loaded to the memory 10002 of the computer 10000, and the functional units included in the apparatus similarly apply to the other apparatuses included in the message presentation system 10.

Some or all of the functions of the functional units included in each apparatus of the message presentation system 10 may be implemented by, for example, hardware such as an application specific integrated circuit (ASIC) or a field-programmable gate array (FPGA).

Information stored by each apparatus included in the message presentation system 10 is stored in the memory 10002 or the auxiliary storage device 10003 of the computer 10000 that configures the apparatus. In the present embodiment, information used by the message presentation system 10 does not depend on a data structure and may be expressed in any data structure. For example, a data structure appropriately selected from a table, a list, a database, or a queue can store the information.

Although not illustrated, the computer 10000 that configures the user registration apparatus 200, the acquisition apparatus 500, the presentation apparatus 600, and the log output apparatus 800 may further include a sensor that acquires biometric information such as a face, a fingerprint, an iris, a palm print, or a finger vein.

Fig. 3 is a sequence diagram illustrating an example of an issuer registration process according to the first embodiment. In step S1101, the issuer's key generation unit 102 generates an issuer's secret key and an issuer's public key. As a method of generating a key pair formed by the issuer's secret key and the issuer's public key, for example, as will be described below, a key pair generation process in an anonymous credential system (ACS) or a redactable signature scheme may be executed.

In step S1102, the issuer registration apparatus communication unit 101 transmits the issuer's secret key generated in step S1101 to the issuer's secret key storage DB 901. In step S1911, the issuer's secret key storage DB 901 stores the issuer's secret key transmitted in step S1102.

In step S1103, the issuer registration apparatus communication unit 101 transmits the issuer's public key generated in step S1101 to the issuer's public key storage DB 902. In step S1921, the issuer's public key storage DB 902 stores the issuer's public key transmitted in step S1103.

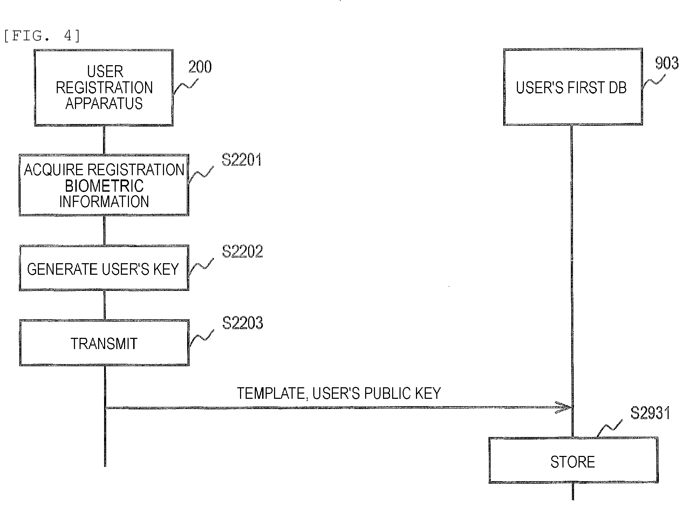

Fig. 4 is a sequence diagram illustrating an example of a user registration process according to the first embodiment. In step S2201, the registration biometric information acquisition unit 202 acquires registration biometric information from a user. As the biometric information, any type of information such as a face, a fingerprint, an iris, a palm print, or a finger vein may be used. A plurality of types of biometric information may be used in combination.

In step S2202, the user's key generation unit 203 generates a set of the template and the user's public key using the registration biometric information acquired in step S2201. A specific example of the process of step S2202 will be described below.

In step S2203, the user registration apparatus communication unit 201 transmits the set of the template and the user's public key generated in step S2202 to the user's first DB 903. In step S2931, the user's first DB 903 stores the set of the template and the user's public key transmitted in step S2203.

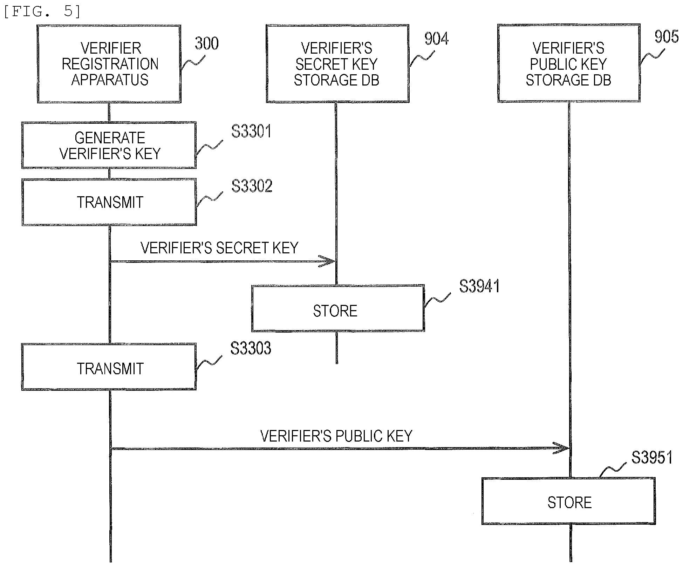

Fig. 5 is a sequence diagram illustrating an example of a verifier registration process according to the first embodiment. In step S3301, the verifier's key generation unit 302 generates a set of a verifier's secret key and a verifier's public key. As a method of generating a key pair of the verifier's secret key and the verifier's public key, a key pair generation algorithm in any encryption scheme may be used. A key pair generated by the key pair generation algorithm in any signature scheme may be included or may not be included.

In step S3302, the verifier registration apparatus communication unit 301 transmits the verifier's secret key generated in step S3301 to the verifier's secret key storage DB 904. In step S3941, the verifier's secret key storage DB 904 stores the verifier's secret key transmitted in step S3302.

In step S3303, the verifier registration apparatus communication unit 301 transmits the verifier's public key generated in step S3301 to the verifier's public key storage DB 905. In step S3951, the verifier's public key storage DB 905 stores the verifier's public key transmitted in step S3303.

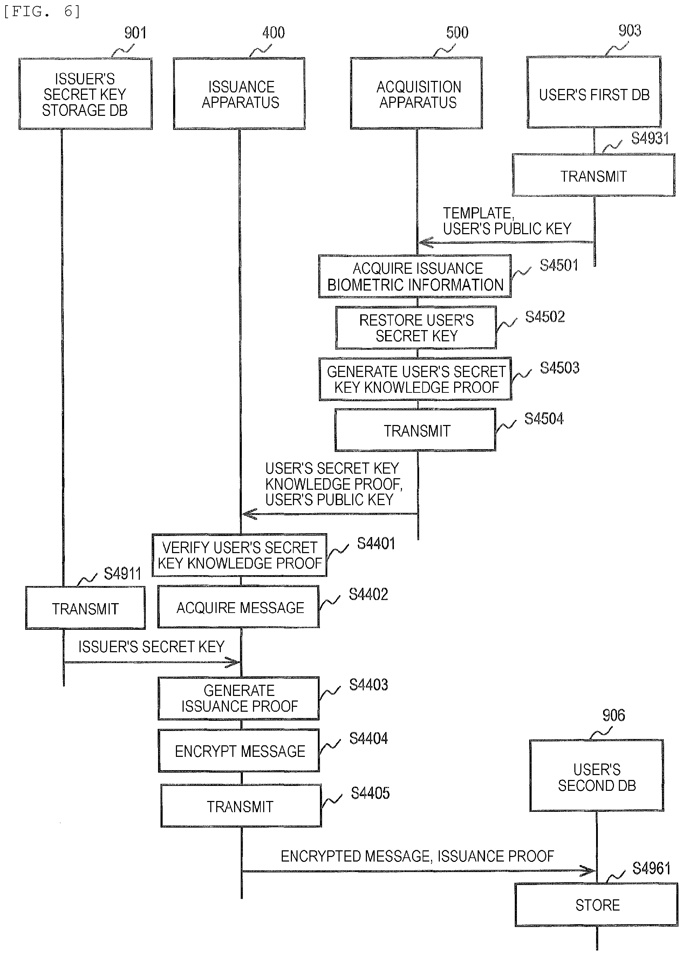

Fig. 6 is a sequence diagram illustrating an example of an issuance process according to the first embodiment. In step S4931, the user's first DB 903 transmits the stored set of the template and the user's public key to the acquisition apparatus 500.

In step S4501, the issuance biometric information acquisition unit 502 acquires issuance biometric information from a user. Specifically, for example, the issuance biometric information acquisition unit 502 acquires types prepared in step S2201 or some of the types of biometric information.

In step S4502, the user's secret key restoration unit 503 restores the user's secret key using the template transmitted in step S4931 and the issuance biometric information acquired in step S4501. A specific example of the process of step S4502 will be described below.

In step S4503, the user's secret key knowledge proof generation unit 504 generates a user's secret key knowledge proof using the user's secret key restored in step S4502. A specific example of the process of step S4503 will be described below. The user's secret key knowledge proof generation unit 504 may generate a knowledge proof for a part of the user's secret key (for example, a part used to generate the presentation proof in step S5605) instead of generating the knowledge proof for the entire user's secret key.

In step S4504, the acquisition apparatus communication unit 501 transmits the user's secret key knowledge proof generated in step S4503 and the user's public key transmitted in step S4931 to the issuance apparatus 400. The acquisition apparatus 500 may calculate the user's public key from the user's secret key restored in step S4502 instead of receiving the user's public key in step S4931. The present invention is not limited to such process. In the presentation process, the presentation apparatus 600 may calculate the user's public key from the user's secret key instead of receiving the user's public key. When the user's public key is calculated from the user's secret key in both processes, the user's public key may not necessarily be stored in the user's first DB 903.

In step S4401, the user's secret key knowledge proof verification unit 402 verifies the user's secret key knowledge proof using the user's secret key knowledge proof and the user's public key transmitted in step S4504. The user's secret key knowledge proof generation process of step S4503 and the user's secret key knowledge proof verification process of step S4401 may be executed in an interactive scheme (that is, a scheme of completing the knowledge proof and the knowledge verification process as a result of communication of one or more reciprocations between the acquisition apparatus 500 and the issuance apparatus 400 (for example, a protocol for zero knowledge proof)).

In step S4402, the message acquisition unit 403 acquires an issuing target message. The issuing target message may be stored in advance in the issuance apparatus 400 or an external DB connected to the issuance apparatus 400, or may be generated by receiving an input from an issuer using the issuance apparatus 400 or a user to whom the message is to be issued.

In step S4911, the issuer's secret key storage DB 901 transmits the stored issuer's secret key to the issuance apparatus 400. In step S4403, the issuance proof generation unit 404 generates an issuance proof using the user's public key transmitted in step S4504, the issuer's secret key transmitted in step S4911, and the message acquired in step S4402. A specific example of the process of step S4403 will be described below.

In step S4404, the data encryption unit 405 generates an encrypted message by encrypting the message acquired in step S4402 using the user's public key transmitted in step S4504. As an encryption scheme, any public key encryption scheme can be used.

In step S4405, the issuance apparatus communication unit 401 transmits the set of the issuance proof generated in step S4403 and the encrypted message generated in step S4404 to the user's second DB 906. In step S4961, the user's second DB 906 stores the set of the encrypted message and the issuance proof transmitted in step S4405.

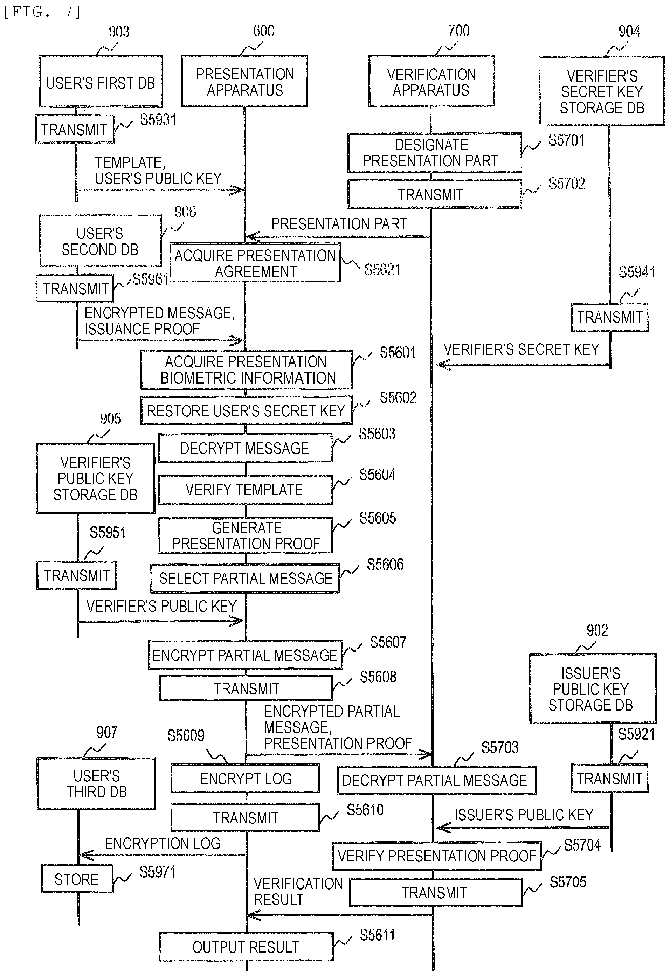

Fig. 7 is a sequence diagram illustrating an example of a presentation process according to the first embodiment. In step S5931, the user's first DB 903 transmits the stored set of the template and the user's public key to the presentation apparatus 600. In step S5961, the user's second DB 906 transmits the stored set of the encrypted message and the issuance proof to the presentation apparatus 600.

In step S5701, the presentation part designation unit 702 designates a presentation part. Specifically, for example, the presentation part is designated by an input from a verifier using the verification apparatus 700 or a manager of the verification apparatus 700. The process of designating the presentation part may be executed before the presentation process. For example, when the presentation process is executed to confirm an age at a store, a date of birth (or a proof indicating that a date of birth is earlier than a predetermined date) may be designated as the presentation part before the presentation process.

In step S5702, the verification apparatus communication unit 701 transmits the presentation part designated in step S5701 to the presentation apparatus 600. When the presentation part is transmitted, a type of message requesting presentation (a name of a message, an issuer, or the like) may be transmitted. The type of message requesting the presentation is designated by, for example, an input from the verifier using the verification apparatus 700 or the manager of the verification apparatus 700. The type of message may be designated before the presentation process.

In step S5621, the presentation agreement acquisition unit 621 acquires an agreement of the user about presentation of a partial message corresponding to the presentation part transmitted in step S5702. For example, the presentation agreement acquisition unit 621 displays content to be presented, a presentation receiver, or the like on a display screen (for example, the output device 10005 of the computer 10000 that configures the presentation apparatus 600), displays a message for inquiring about agreement of the presentation on the screen, and allows the user to select "Yes" or "No".

When "Yes" is selected, the process proceeds to a subsequent process. When "No" is selected, for example, the process is stopped. When "No" is selected, the presentation agreement acquisition unit 621 may display the fact that the process was stopped on the display screen.

In step S5601, the presentation biometric information acquisition unit 602 acquires presentation biometric information from the user. The presentation biometric information acquisition unit 602 acquires, for example, types prepared in step S2201 or some of the types of biometric information.

In step S5602, the user's secret key restoration unit 603 restores the user's secret key using the template transmitted in step S5931 and the presentation biometric information acquired in step S5601. When the presentation biometric information is sufficiently close to the registration biometric information used to generate the template, the user's secret key that has a fixed value corresponding to the template is restored. A specific example of the process of step S5602 will be described below.

In step S5603, the data decryption unit 604 executes a decryption process on the encrypted message transmitted in step S5961 using the user's secret key restored in step S5602 to obtain a message.

In step S5604, the template verification unit 605 verifies whether the template transmitted in step S5931 is falsified. Through the process of step S5604, it is possible to reduce a risk of attacks that illegally change the template. A specific example of the process of step S5604 will be described below. When the process of step S5604 is executed and the verification is successful, the process proceeds to a subsequent process. When the verification fails, the subsequent process is stopped.

In step S5605, the presentation proof generation unit 606 generates a presentation proof using the presentation part transmitted in step S5702, the issuance proof transmitted in step S5961, the user's secret key restored in step S5602, and a part or all of the message restored in step S5603 as necessary. A specific example of a method of generating the presentation proof in step S5605 will be described below.

In step S5606, the partial message selection unit 607 generates the partial message by selecting the presentation part transmitted in step S5702 among the message elements included in the message decrypted in step S5603. When all the message elements included in the message are to be presented, the partial message selection unit 607 may select all the message elements included in the message or the process of step S5606 may be omitted.

In step S5951, the verifier's public key storage DB 905 transmits the stored verifier's public key to the presentation apparatus 600. In step S5607, the data encryption unit 608 generates the encrypted partial message by encrypting the partial message generated in step S5606 using the verifier's public key transmitted in step S5951.

In step S5608, the presentation apparatus communication unit 601 transmits the set of the partial message encrypted in step S5607 and the presentation proof generated in step S5605 to the verification apparatus 700. In step S5941, the verifier's secret key storage DB 904 transmits the stored verifier's secret key to the verification apparatus 700.

In step S5609, the data encryption unit 608 generates an encrypted log by encrypting a log related to the presentation apparatus 600 according to a public key encryption scheme using the user's public key transmitted in step S5931. The data encryption unit 608 may encrypt the log according to a common key encryption scheme using the user's secret key restored in step S5602 instead of the public key encryption scheme using the user's public key transmitted in step S5931.

The log to be encrypted is, for example, a presentation date and time, a presentation destination, presentation content (for example, content of the presentation part, type of message, or the like), an identifier of the presentation apparatus 600 used for the presentation, and the like. After a verification result transmitted in step S5705 is received, the process of step S5609 may be executed and the verification result in step S5704 may be included in the log.

In step S5610, the presentation apparatus communication unit 601 transmits the encrypted log generated in step S5609 to the user's third DB. In step S5971, the user's third DB stores the encrypted log transmitted in step S5610.

In step S5703, the data decryption unit 703 generates the partial message by decrypting the encrypted partial message transmitted in step S5608 using the verifier's secret key transmitted in step S5941. In step S5921, the issuer's public key storage DB 902 transmits the stored issuer's public key to the verification apparatus 700.

In step S5704, the presentation proof verification unit 704 performs verification using the issuer's public key transmitted in step S5921, the presentation proof transmitted in step S5608, and the partial message decrypted in step S5703 to obtain verification success or verification failure as a verification result. The verification may be executed by the presentation proof generation process of step S5605, the presentation proof verification process of step S5704, and the interactive scheme between the presentation apparatus 600 and the verification apparatus 700.

The verification apparatus 700 may output at least one of the verification result and the presented partial message. An output destination may be a display screen (for example, the output device 10005 of the computer 10000 that configures the verification apparatus 700) or another program. For example, when the output destination is a settlement program, an example of a process by the settlement program if the verification result is success is a process of executing discount according to the presented partial message (address, member information, or the like) and executing a settlement process for the user. When the output destination is an entrance management program (an entrance management program or the like to an event site is also an example), an example of a process of the entrance management process if the verification result is success and the presented partial message satisfies a predetermined condition (for example, a condition that an inspection result of a predetermined infectious disease is negative) is a process of permitting entrance of the user (for example, opening a gate or a door).

In step S5705, the verification apparatus communication unit 701 transmits the verification result obtained in step S5704 to the presentation apparatus 600. In step S5611, the result output unit 609 outputs the verification result transmitted in step S5705. The output destination may be a display screen (for example, the output device 10005 of the computer 10000 that configures the presentation apparatus 600) or may be another program (for example, a settlement program or an entrance management program).

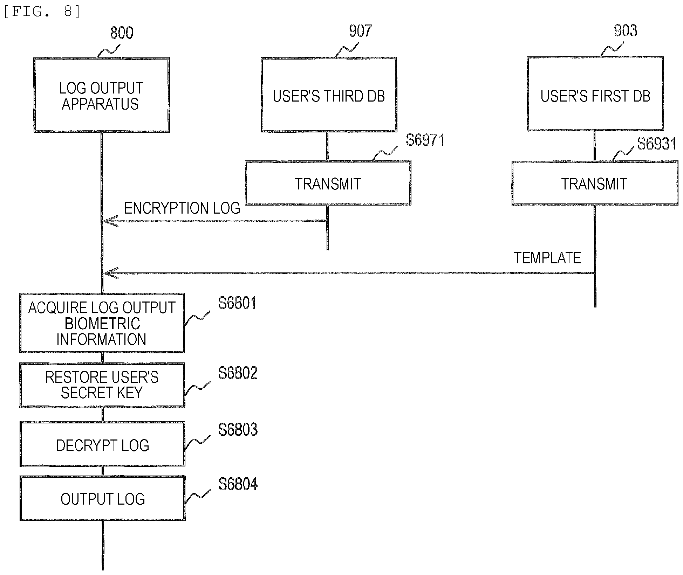

Fig. 8 is a sequence diagram illustrating an example of a log output process according to the first embodiment. In step S6971, the user's third DB 907 transmits the stored encrypted log to the log output apparatus 800. In step S6931, the user's first DB 903 transmits the stored template to the log output apparatus 800.

In step S6801, the log output biometric information acquisition unit 802 acquires log output biometric information from the user. The log output biometric information acquisition unit 802 acquires the types prepared in step S2201 or some of the types of biometric information.

In step S6802, the user's secret key restoration unit 803 restores the user's secret key using the template transmitted in step S6931 and the log output biometric information acquired in step S6801. A specific example of the process of step S6802 will be described below.

In step S6803, the data decryption unit 804 obtains the log by decrypting the encrypted log transmitted in step S6971 using the user's secret key restored in step S6802. In step S6804, the log output unit 805 outputs the log decrypted in step S6803. An output destination may be a display screen (for example, the output device 10005 of the computer 10000 that configures the log output apparatus 800) or may be another program.

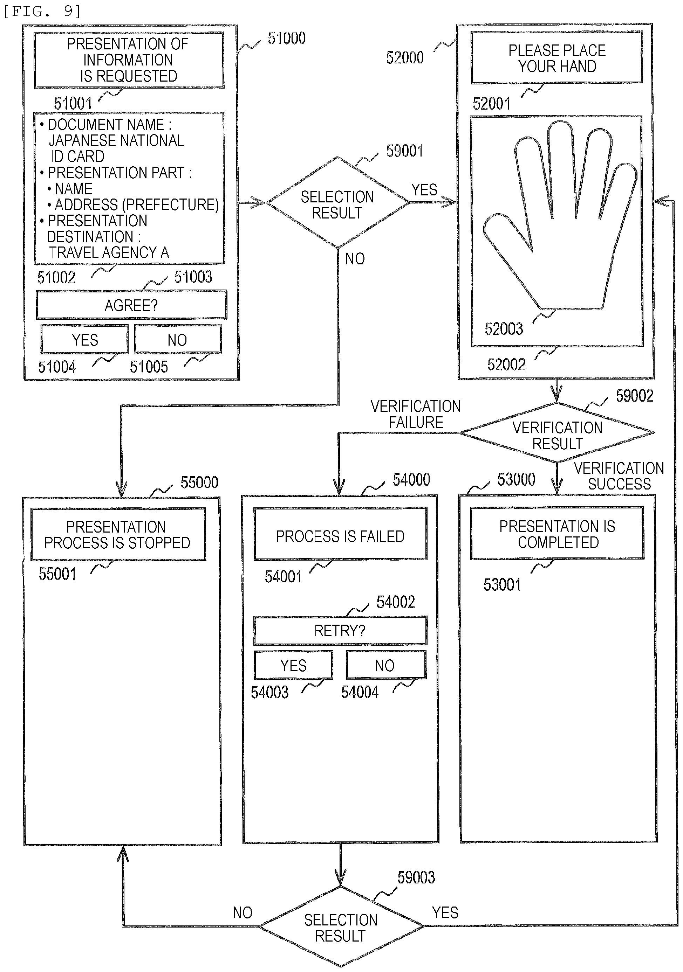

Fig. 9 is a flowchart illustrating an example of transition of display content of a display screen of the presentation apparatus 600 during the presentation process according to the first embodiment. Display content 51000 is an example of the display content in the presentation agreement acquisition process of step S5621. The display content 51000 includes, for example, blocks 51001, 51002, 51003, 51004, and 51005.

In the block 51001, for example, text for requesting presentation of information is displayed. In the block 51002, for example, a document name corresponding to a message of which presentation is requested and text indicating a presentation part and a presentation destination of the message are displayed. In the block 51003, for example, text for inquiring about agreement of the presentation is displayed. In the block 51004, for example, an option of "Yes" is displayed. In the block 51005, for example, an option of "No" is displayed.

A branch 59001 is a branch related to a selection result in the presentation agreement process of step S5621. When the presentation is agreed in step S5621, that is, when the block 51004 is selected (Yes in branch 59001), display content 52000 is displayed. When the presentation is not agreed in step S5621, that is, when the block 51005 is selected ("No" in branch 59001), display content 55000 is displayed.

The display content 52000 is an example of display content in the presentation biometric information acquisition process of step S5601. The display content 52000 includes, for example, blocks 52001 and 52002.

In the block 52001, for example, text for requesting to present the biometric information is displayed. In the block 52002, an image captured by a sensor (a camera or the like) to acquire biometric information is displayed. The block 52002 may include guide display 52003 indicating an appropriate position in the sensor to present the biometric information.

The display content 55000 is an example of display content when "No" is selected in selection of the presentation agreement process of step S5621 or selection of whether to retry in step S5611 when the verification result is verification failure. The display content 55000, for example, the display content 54000 includes, for example, a block 55001 in which a message indicating the fact that the presentation process is stopped is displayed.

A branch 59002 is a branch related to the verification result of step S5704. When the verification in step S704 is successful ("verification success" in branch 59002), display content 53000 is displayed in step S5611. When the verification in step S5704 fails ("verification failure" in branch 59002), display content 54000 is displayed in step S5611. The display content 53000 includes, for example, a block 53001 in which text indicating the fact that the presentation process is completed is displayed.

The display content 54000 includes, for example, blocks 54001, 54002, and 54003. In the block 54001, for example, text indicating that the verification failed (or the presentation process failed) is displayed. In the block 54002, for example, text for inquiring about retry of the verification is displayed. In the block 54003, an option of "Yes" is displayed. In the block 54004, for example, an option of "No" is displayed.

When any process fails until step S5704, for example, as in the case of the verification failure, transition to the display content 54000 may be executed. Here, which process has failed may be displayed in the block 54001.

A branch 59003 is a branch related to a selection result in the display content 54000. When the verification is retried, that is, when the block 54003 is selected ("Yes" in branch 59003), transition to the display content 52000 is executed. When the verification is not retried, that is, when the block 54004 is selected ("No" in branch 59003), transition to the display content 55000 is executed.

An example of a process until the display content 51000 is displayed is as follows. The presentation apparatus 600 includes a sensor such as a camera and the sensor reads data such as a 2-dimensional barcode displayed on the display screen of the verification apparatus 700.

The data indicates, for example, a uniform resource identifier (URI) to a web page including information such as which process is to be executed between the presentation process and the issuance process, a document name, a presentation part, and a presentation destination.

The presentation apparatus 600 can obtain information such as execution of the presentation process, a presentation document name, a presentation part, and a presentation destination by accessing the web page corresponding to the URI acquired by the sensor, and can display text of the block 51002. Means for accessing the information such as which process is to be executed between the presentation process and the issuance process, a document name, a presentation part, and a presentation destination may be any method not limited to reading of a 2-dimensional barcode.

### [Specific Examples of User's Key Generation Process and User's Secret Key Restoration Process]

Specific examples of the user's key generation process of step S2202 and the user's secret key restoration process of steps S4502, S5602, and S6802 will be described. It is assumed that the specific example of the user's secret key restoration process will be described for step S4502. For steps S5602 and S6802, the user's secret key can be restored by executing a process similar to, for example, step S4502.

In the process, for example, a biometric encryption scheme is used. In the biometric encryption scheme, from a registration feature x_E (where "_" indicates a subscript) in a registration process, a helper string c_E and a registration secret key s_E are generated. In the biometric encryption scheme, from a restoration feature x_A and the helper string, a restoration secret key s_A is generated in a restoration process.

When x_E is sufficiently close to x_A, it becomes s_E = s_A, that is, the registration secret key is restored. As the biometric encryption scheme, any scheme such as Fuzzy Extractor, Fuzzy Signature, Fuzzy Commitment, or Fuzzy Vault can be used.

In step S2202, the user's key generation unit 203 generates the registration feature x_E from the registration biometric information and generates the helper string c_E and the registration secret key s_E from the registration feature x_E through the registration process according to the biometric encryption scheme. The user's key generation unit 203 determines a template T so that the helper string c_E is included.

The template T may include data called a pseudo-identifier (for example, a hash value of the registration secret key s_E or a public key corresponding to the registration secret key s_E). On the other hand, the user's key generation unit 203 generates a user's public key upk using the registration secret key s_E. A case in which a user's secret key usk is generated as an internal process at that time will be described below, but the user's secret key usk may not necessarily be generated.

In step S4502, the user's secret key restoration unit 503 first extracts the restoration feature x_A from the issuance biometric information, executes the restoration process according to the biometric encryption scheme using x_A and c_E included in T, and generates the restoration secret key s_A. When x_E is sufficiently close to x_A, it becomes s_E = s_A, that is, the registration secret key is restored.

The user's secret key restoration unit 503 verifies whether s_E is correctly restored using the pseudo-identifier. When s_E is not restored, the user's secret key restoration unit 503 may stop the process. Instead of stopping the process, the process may proceed to step S5611 and the fact that the restoration of the user's secret key failed may be output. When the registration secret key s_E is correctly restored, the user's secret key restoration unit 503 executes a key restoration process corresponding to the method of generating (usk, upk) using s_E to restore usk.

As a first example of the method of generating (usk, upk), the user's key generation unit 203 generates a pair of a secret key sk1 and a public key pk1 by a key generation algorithm according to any public key encryption scheme or an electronic signature scheme. The user's key generation unit 203 determines usk := sk1 and determines upk so that pk1 is included. The user's key generation unit 203 generates data Enc(s_E, sk1) in which sk1 is encrypted using s_E and includes Enc(s_E, sk1) in the template T. Here, in the key restoration process, the user's secret key restoration unit 503 can restore usk by restoring sk1 from Enc(s_E, sk1) using the restored s_E.

sk1 may be a set of a plurality of secret keys and pk1 may be a set of a plurality of corresponding public keys. In the subsequent example, each of a secret key and a public key may be a set including a plurality of keys. When each of a secret key and a public key includes a plurality of keys, encryption, decryption, electronic signature generation, and electronic signature verification may be performed using a predetermined key among the plurality of keys.

As a second example of the method of generating (usk, upk), the user's key generation unit 203 may generate sk2 by a secret key sk2 := f_1(s_E) using transformation f_1 (for example, identity transformation, transformation by a pseudo-random number generator or a hash function, or the like) for s_E, generate a public key pk2 corresponding to sk2, determine usk := sk2, and determine upk so that pk2 is included. Here, in the key restoration process, the user's secret key restoration unit 503 can restore usk when f_1 (s_E) is calculated for the restored s_E.

The user's secret key and the user's public key that can be obtained by connecting the user's secret key and the user's public key that can be obtained in the first and second examples of the method of generating (usk, upk) may be used. Alternatively, when the registration process according to the biometric encryption scheme is a scheme capable of designating s_E when generating a template, the user's key generation unit 203 may generate (usk, upk) and generate c_E so that s_E becomes usk. Here, in the key restoration process, the user's secret key restoration unit 503 can restore usk by restoring s_E.

Alternatively, as in the following example, a method obtained by combining the first and second examples may be used. First, the user's key generation unit 203 generates a pair of the secret key sk1 and the public key pk1 according to the key generation algorithm in any public key encryption scheme or electronic signature scheme. The user's key generation unit 203 generates sk2 with a secret key sk2 := f_1 (s_E) using transformation f_1 (for example, identity transformation, transformation by a pseudo-random number generator or a hash function, or the like) for s_E and generates the public key pk2 corresponding to sk2. The user's key generation unit 203 determines (usk, upk) with usk **:=** (sk1, sk2) and upk **:=** (pk1, pk2). The user's key generation unit 203 generates data Enc(sk2, sk1) in which sk1 is encrypted using sk2 and includes Enc(sk2, sk1) in the template T. Here, in the key restoration process, the user's secret key restoration unit 503 can restore usk by restoring sk2 from the restored s_E with sk2 := f_1(s_E) and further restoring sk1 from Enc(sk2, sk1) using the restored sk2.

In the case of such method, for example, sk2 may be used for a message decryption process and sk1 may be used for the presentation proof generation process, so that sk1 and sk2 are used for different processes. Therefore, for example, the message encryption process may be executed with sk2 or pk2 and the issuance proof generation process may be executed using pk1. The present invention is not limited to the present example. When each of a secret key and a public key includes a plurality of keys, each of the keys may be used for different processes.

To generate the user's secret key, secret information (for example, a password, an additional secret key stored in a DB, or the like) may be used in addition to the registration biometric information. For example, the user's key generation unit 203 may determine again, as usk, a value obtained by executing transformation on data connecting usk generated by the foregoing method with secret information using any function such as a hash function. Here, the user's key generation unit 203 may determine the user's public key to correspond to usk defined again. The user's secret key restoration unit 503 can receive input of the secret information and restore the user's secret key by using the secret information in addition to the presentation biometric information. As such, by using the secret information in addition to the registration biometric information to generate the user's secret key, it is possible to reduce a risk in which the user's secret key is illegally restored, and thus improve safety.

### [Specific Examples of User's Secret Key Knowledge Proof Generation Process and Verification Process]

Specific examples of the user's secret key knowledge proof generation process of step S4503 and the user's secret key knowledge proof verification process of step S4401 will be described.

As a first specific example, the user's secret key knowledge proof generation unit 504 generates a knowledge proof according to any knowledge proof protocol such as Schnorr Protocol. Here, the user's secret key knowledge proof verification unit 402 can verify whether the knowledge proof is correct by executing the verification process defined by the protocol.

As a second specific example, the user's secret key knowledge proof verification unit 402 transmits data (issuance challenge) such as a random number to the acquisition apparatus 500, the user's secret key knowledge proof generation unit 504 generates an electronic signature for the issuance challenge using the user's secret key, and the user's secret key knowledge proof verification unit 402 verifies a relation between the issuance challenge, the transmitted user's public key, and the electronic signature.

### [Specific Examples of Issuance Proof Generation Process, Presentation Proof Generation Process, and Presentation Proof Verification Process]

Specific examples of the issuance proof generation process of step S4403, the presentation proof generation process of step S5605, and the presentation proof verification process of step S5704 will be described. A message includes n (where n is a positive integer) message elements m[1], m[2], ..., m[n], and a partial message includes m[i_1], m[i_2], ..., m[i_k] ({i_1, i_2, ..., i_k} is a subset of {1, 2, ..., n}).

In the presentation proof generation process, the presentation proof generation unit 606 generates a presentation proof generation secret key usk_S from the user's secret key usk by usk_S := f_S(usk), and it is assumed that a corresponding public key upk_S is included in the user's public key upk. As an example of the function f_S, identity transformation or a function of selecting a predetermined part in usk can be exemplified.

As a first specific example, a general signature scheme or a redactable signature scheme is used. The schemes will be described.

The general signature scheme includes a key pair generation process, an electronic signature generation process, and a verification process which are respectively written as Gen_S, Sig_S, and Ver_S. Each process is as follows. In Gen_S, a set of a signature key sk_S and a verification key pk_S is generated by (sk_S, pk_S) = Gen_S(). In Sig_S, an electronic signature Q is generated by sk_S for a message L by Q = Sig_S(sk_S, L). In Ver_S, a verification result Result_S is output by Result_S = Ver_S(pk_S, L, Q). Result_S is verification success or verification failure.

The redactable signature scheme includes a key pair generation process, an electronic signature generation process, a redactable process, and a verification process which are respectively as Gen_R, Sig_R, Derive_R, and Ver_R. Each process is as follows.

Gen_R is a process of generating a set of a signature key sk_R and a verification key pk_R by (sk_R, pk_R) = Gen_R(). Sig_R is a process of generating an electronic signature Q_1 by sk_R for (M[1], M[2], ..., M[N]) by Q_1 = Sig_R(sk_R, (M[1], M[2], ..., M[N])) for a message (M[1], M[2], ..., M[N]) formed by N (where N is a positive integer) message elements.

Derive_R is a process of generating an electronic signature Q_2 by sk_R for (M[I_1], M[I_2], ... M[I_K]) by Q_2 = Derive_R({I_1, I_2, ..., I_K}, (M[1], M[2], ..., M[N]), Q_1). Here, K is a positive integer of N or less and {I_1, I_2, ..., I_K} is a subset of {1, 2, ..., N}. The redactable signature scheme has characteristics that the electronic signature Q_2 by sk_R can be generated without requiring sk_R.

Ver_R is a process of outputting a verification result Result_R by Result_R = Ver_R(pk_R, (M[I_1], M[I_2], ..., M[I_K]), Q_2). Result_R is verification success or verification failure.

A first specific example in which the processes are used will be described. First, (usk_S, upk_S) is assumed to have the same format as a key pair generated by Gen_S(). In the issuer's key generation process of step S1101, the issuer's key generation unit 102 generates a key pair (isk_R, ipk_R) by Gen_R, isk_R is included in an issuer's secret key, and ipk_R is included in an issuer's public key.

In the issuance proof generation process of step S4403, the issuance proof generation unit 404 generates an electronic signature q_11 by q_11 = Sig_R(isk_R, (m[1], m[2], ..., m[n], upk_S)) and generates an issuance proof so that the electronic signature q_11 is included.

In the presentation proof generation process of step S5605 and the presentation proof verification process of step S5704, for example, the following process is executed. First, the presentation proof verification unit 704 generates data (presentation challenge) R_2 such as a random number and transmits the data R_2 to the presentation apparatus 600. The presentation proof generation unit 606 generates an electronic signature q_12 by isk_R for (m[i_1], m[i_2], ..., m[i_k], upk_S) by q_12 = Derive_R({i_1, i_2, ..., i_k, n + 1}, (m[1], m[2], ..., m[n], upk_S), q_11). The presentation proof generation unit 606 generates an electronic signature q_13 by usk_S for R_2 by q_13 = Sig_S(usk_S, R_2). The presentation proof generation unit 606 generates a presentation proof so that q_12, q_13, and upk_S are included.

The presentation proof verification unit 704 determines Result_S and Result_R by Result_S = Ver_S(upk_S, R_2, q_13) and Result_R = Ver_R(ipk_R, (m[i_1], m[i_2], ..., m[i_k], upk_S), q_12), determines that verification is successful when Result_S and Result_R are both verification success, and determines that the verification fails otherwise. Result_S indicates that it is verified whether the user's secret key usk_S corresponding to the presented user's public key upk_S is used to generate a presentation proof. Result_R indicates that it is verified whether a presented partial message and upk_S are surely correct values designated by an issuer.

In particular, the general signature scheme can be used as a method of generating the electronic signature q_11. For example, there is a method of generating n random numbers r[1], r[2], ..., r[n], defining h_i = Hash(m[i], r[i]) for each i = 1, 2, ..., n, determining an electronic signature by Sig_S for data in which h_1, h_2, ..., h_n are connected as q_110, and determining a set of q_110, h_1, h_2, ..., h_n, and r_1, r_2, ..., r_n as q_11.

Here, q_12 may be determined as a set of q_110, h_1, h_2, ..., h_n, and r_[i_1], r_[i_2], ..., r_[i_k]. In verification of q_12, verification of a relation with (h_i, m[i], r[i]) for each of the presented message elements and verification of a relation between q_110 and (h_1, h_2, ..., h_n) may be executed.

The example is merely exemplary, and data obtained by executing a process other than connection of h_1, h_2, ..., h_n may be used as signature target data for generating q_110. For example, Hash(h_1, h_2, ..., h_n) may be used as signature target data for generating q_110, or a scheme called Markle Hash may be used.

As such, there is an effect that any signature scheme can be used for each process. Accordingly, it is not necessary to use a library for executing a special encryption operation and signature operation or mount a special encryption operation and signature operation, and an encryption operation and a signature operation can be mounted by a general encryption library and a general signature library (for example, a library providing the RSA cryptosystem and an RSA signature function).

There is an effect that it is difficult to commit illegality such as a case where a verifier receiving a presentation proof transmits the presentation proof to another verifier by setting R_2 as data such as a random number transmitted from the verification apparatus 700. To obtain such an effect, as a signature target sentence for generating q_13, information regarding a verifier (a name of a verifier or the like) or data R_3 such as a presentation date and time may be included instead of R_2 or in addition to R_2. When the presentation apparatus 600 generates R_3, R_3 is included in the presentation proof, so that the verification apparatus 700 can verify q_13. To further clarify presentation agreement of a user, a signature target sentence for generating q_13 may include a partial message to be presented.

A second specific example will be described. The second specific example is a method using ACS described in NPL 2 or the like. In the issuance proof generation process of step S4403, the issuance proof generation unit 404 generates an issuance proof using an issuer's secret key isk, upk_S that is a part of a user's public key, and a message (m[1], m[2], ..., m[n]).

For example, the issuance proof generation unit 404 generates an electronic signature q_21 by isk for (m[1], m[2], **...,** m[n], usk_S). When the method of NPL 2 is used, such an electronic signature can be generated and a property of a redactable signature can be obtained.

In the presentation proof generation process of step S5605, the presentation proof generation unit 606 executes communication with the verification apparatus 700 as necessary and generates a presentation proof using the message, the user's secret key, the presentation part, and the issuance proof. For example, the presentation proof generation unit 606 generates an electronic signature q_22 by isk for (m[i_1], m[i_2], ..., m[i_k], usk_S), further generates a knowledge proof q_23 of usk_S, and generates a presentation proof so that q_22 and q_23 are included.

In the presentation proof verification process of step S5704, the presentation proof verification unit 704 verifies a relation between the presented partial message, the presentation proof, and the issuer's public key and outputs verification success or verification failure. For example, the presentation proof verification unit 704 verifies a relation between (m[i_1], m[i_2], ..., m[i_k]), (q_22, q_23), and ipk and outputs verification success or verification failure.

In the present method, when (m[i_1], m[i_2], ..., m[i_k]) is falsified, the verification success is difficult, and it is difficult to generate q_23 of which verification is successful when usk_S is not known. When the presentation proof is generated, the presentation proof generation unit 606 generates the presentation proof using a random number transmitted from the verification apparatus 700 (an example of a presentation challenge). Therefore, it is possible to reduce a risk of an attack in which a verifier impersonates a user to present to another verifier.

### [Specific Examples of Template Verification Process]

A first specific example of the template verification process of step S5604 will be described. First, in step S4504, the acquisition apparatus communication unit 501 transmits a function value f_2(T) calculated using a predetermined function f_2 (for example, a hash function) for the template T to the issuance apparatus 400. In step S4402, the message acquisition unit 403 determines a message so that the function value f_2(T) is included as a message element.

In step S5604, the template verification unit 605 calculates a function value using f_2 for the transmitted template and verifies whether the function value is equal to a value of f_2(T) included in the message. The template verification unit 605 verifies whether the function value f_2(T) included in the message is falsified by verifying a relation between the function value f_2(T) included in the message and the issuance proof. The template verification unit 605 determines that the verification is successful when the two verifications are successful. The template verification unit 605 determines that the verification fails when any of the verification fails.

A second specific example of the template verification process of step S5604 will be described. In the second specific example, the template verification unit 605 verifies legitimacy of a value of data of the template. It is assumed that the registration feature x_E belongs to a linear space X. S denotes a partial space of X. A case in which the helper string c_E is generated by c_E := x_E - CV(x_E) and the template T includes c_E is conceivable. Here, CV(x_E) indicates a point in S closest to x_E. Here, it is necessary for c_E included in the template T to satisfy CV(c_E) = 0. Accordingly, the template verification unit 605 can confirm whether c_E is illegal by verifying whether the condition is satisfied.

A third specific example of the template verification process of step S5604 will be described. In the third specific example, the template verification unit 605 verifies legitimacy of a value of data of the template. It is assumed that the registration feature x_E is a t-dimensional real-valued vector. A case in which the helper string c_E is generated by c_E : =x_E - B * <B^(-1) * x_E> using a t-dimensional regular matrix B and c_E included in the template T is conceivable. Here, * indicates a product of a matrix and a vector and <> indicates a process of cutting off a decimal point part of each component of a vector. Here, in c_E included in the template T, each element of B^(-1) * c_E is necessarily 0 or more and less than 1. Accordingly, the template verification unit 605 can confirm whether c_E is not illegal by verifying whether the condition is satisfied.

### [Modification Example of Processing Flow]

In the foregoing processing flow, some of the processes can also be modified. For example, the following modifications can be given as examples.

When the user's first DB 903 is publicized, the issuance proof generation unit 404 may use information capable of identifying the user's public key instead of using the user's public key in the issuance proof generation process of step S4403. As the information capable of identifying the user's public key, for example, a location of the user's first DB 903 can be exemplified. When the user's public key for a plurality of users is stored in the user's first DB 903, a case in which information such as a user ID for identifying which user's public key is used as the information capable of identifying the user's public key can be exemplified.

The user's secret key knowledge proof generation process of step S4503 and the user's secret key knowledge verification process of step S4401 may be omitted. By executing the processes, it is possible to verify that a legitimate user corresponding to the user's public key transmitted in step S4504 executes the processes.

A part or all of the issuance proof generation process of step S4403 may be executed by the issuer's secret key storage DB 901. For example, when the issuance proof generation process includes a signature generation process using the issuer's secret key, the issuance apparatus 400 may transmit signature target data to the issuer's secret key storage DB 901, the issuer's secret key storage DB 901 may transmit an electronic signature obtained by executing the signature generation process to the issuance apparatus 400, and the issuance apparatus 400 may execute the remaining process of the issuance proof generation process using the electronic signature. As such, the issuer's secret key is not transmitted to the outside of the issuer's secret key storage DB 901, and thus safety is improved.

The message encryption process of step S4404 may be executed by the user's second DB 906 instead of the issuance apparatus 400. Here, in step S4405, the issuance apparatus communication unit 401 transmits a message instead of an encrypted message. Alternatively, in step S4405, the issuance apparatus communication unit 401 may transmit the message to the acquisition apparatus 500 and the acquisition apparatus 500 may execute the message encryption process. Here, instead of public key encryption using the user's public key, a common key encryption using the user's secret key may be executed. Here, by causing the issuance apparatus 400 to execute the message encryption process of step S4404, there is an effect that a message is protected even in communication from the issuance apparatus 400.

The acquisition apparatus 500 or the presentation apparatus 600 may verify a relation between an issued message and an issuance proof. Accordingly, it is possible to confirm whether the issuance proof is legitimate. When the message and the issuance proof are encrypted, the user's secret key may be used for decryption.

The presentation part may be a content for inquiring for a predetermined component about whether the message is equal to a predetermined value or is a value included in a predetermined range in addition to or instead of indicating a message element to be presented.

For example, when M3 := (Taro Hitachi, January 1, 2000, male, 1-6-6 Marunouchi, Chiyoda-ku, Tokyo) is defined, the structure information S3 is defined to be S3 := (name, date of birth, gender, address), and the verification apparatus 700 knows that M3 has a structure of S3, the presentation part may be a set of the first message element of M3 and a content for inquiring about whether the second in M3 is a date earlier than January 1, 2002. Here, the partial message may be assumed to be a message including the first message element of M3 and the presentation proof may include a proof indicating that the second is a date earlier than January 1, 2002. As ACS capable of such proof, for example, Function Credential may be used.

In step S4404, the data encryption unit 405 may encrypt the issuance proof in addition to the message. Here, in communication and storage processes related to the issuance proof immediately before step S5603, the encrypted issuance proof is used instead of the issuance proof. In the message decryption process of step S5603, the data decryption unit 604 decrypts the encrypted issuance proof in addition to the message to obtain the issuance proof. The message and the issuance proof may be individually encrypted or may be collectively encrypted. In a foregoing example of the user's key generation method, the template includes a part of the encrypted user's secret key. In the present example, instead of including a part of the encrypted user's secret key in the template, the data encryption unit 405 may generate an encrypted message by encrypting a part of the user's secret key together with the message. Here, through the message decryption process of step S5603, a part of the user's secret key is decrypted together with the message and can be used for, for example, the presentation proof generation process of step S5605. Here, in step S5602, the user's secret key restoration unit 603 may not restore the part of the user's secret key in the user's secret key and may restore a part necessary in the message decryption process in step S5603 in the user's secret key. The data encryption unit 405 may encrypt the issuance proof together with the message and the part of the user's secret key.

The presentation part may be designated by the presentation apparatus 600. Here, for example, the user may be allowed to select the presentation part in the presentation agreement acquisition process of step S5621. In step S5608, the presentation apparatus communication unit 601 transmits information regarding the presentation part as necessary.

In the presentation process, the presentation apparatus 600 does not necessarily require all the parts of the message acquired in step S4402. For example, in the method of using the general signature scheme in the method described in the first specific example of the issuance proof generation process, the presentation proof generation process, and the presentation proof verification process, from the message, only the partial messages (that is, the set of the message elements corresponding to the presentation part in the message) are necessary for the processes of steps S5605, S5606, S5607, and S5608.

As such, when only a part of the message acquired in step S4402 is necessary in the presentation process, the message decrypted in step S5603 (also called a "message for presentation process") may be only a part of the message acquired in step S4402 (also called a "message for issuance process").

The encrypted message (also called an "encrypted message for presentation process") transmitted in step S5961 may be only a necessary part in the encrypted message generated in step S4404 (also called an "encrypted message for issuance process"). Specifically, the encrypted message for presentation process may be only a part necessary to decrypt "parts necessary for the processes of steps S5605, S5606, S5607, and S5608 in the encrypted message for issuance process").

An example of a processing method of setting the encrypted message for presentation process as a part of the encrypted message for issuance process and setting the message for presentation process as a part of the message for issuance process will be described. In step S4404, the data encryption unit 405 generates an encrypted message for issuance process including a plurality of blocks by dividing the message for issuance process into a plurality of blocks (for example, setting message elements included in the message for issuance process as each block) and encrypting each block.

In step S5961, the user's second DB transmits a necessary part in the encrypted message for issuance process as the encrypted message for presentation process to the presentation apparatus 600. For example, as in the foregoing example, when the partial messages only needs to be included in the message for presentation process, the user's second DB first receives the presentation part designated in step S5701 from another apparatus (for example, the verification apparatus 700 or the presentation apparatus 600). Subsequently, the user's second DB identifies message elements configuring the partial message based on the presentation part. Subsequently, the user's second DB selects a block of the encrypted message corresponding to the identified message element in the encrypted message for issuance process and transmits the selected block as the encrypted message for presentation process to the presentation apparatus 600.

As such, by transmitting only the necessary part in the encrypted message for issuance process as the encrypted message for presentation process in step S5961, it is possible to reduce a risk of leaking of a part not included in the message for presentation process in the message for issuance process.

When the message for presentation process matches the partial message, the partial message selection unit 607 may select all the message elements included in the message for presentation process as the partial messages in step S5606.

The partial message encryption process of step S5607 may not be executed. Here, in step S5608, the presentation apparatus communication unit 601 can transmit the partial message instead of the encrypted partial messages, and thus the partial message decryption process of step S5703 can be omitted.

The presentation apparatus 600 may execute authentication to verify legitimacy of the verification apparatus 700. The set of the verifier's secret key and the verifier's public key can be used for the authentication. For example, the presentation apparatus 600 may generate a challenge such as a random number and transmit the challenge to the verification apparatus 700, the verification apparatus 700 may generate an electronic signature according to any signature algorithm using a part or all of the verifier's secret key, and the presentation apparatus 600 may execute signature verification. Alternatively, the verification apparatus 700 may prove knowledge about a part or all of the verifier's secret key by any knowledge proof protocol.

In the log encryption process of step S5609, the encryption may be executed with a secret key or a public key of a system manager instead of being executed with the user's public key or the user's secret key. Here, the secret key and the public key may be a pair of keys in normal public key encryption or a pair generated from biometric information of the system manager may be used in a process similar to the user registration process. When the pair generated from the biometric information is used, the log output biometric information acquisition unit 802 acquires the biometric information of the system manager in the log encryption process of step S5609.

The verifier's secret key storage DB 904 includes a partial message decryption unit, and the partial message decryption unit may execute the partial message decryption process in step S5703 instead of the verification apparatus 700. Accordingly, the verifier's secret key is not transmitted to the outside of the verifier's secret key storage DB 904, and thus safety is improved.

To confirm identification of an issuance processing target, for example, the issuer or the issuance apparatus 400 may request a user to present an identification confirmation document and the user may present the identification confirmation document. The presentation method may be a method for presentation by an issuer from the user in a face-to-face manner or may be a method in which the acquisition apparatus 500 acquires the identification confirmation document as electronic data such as a photo and transmits the identification confirmation document to the issuance apparatus 400. In addition to or instead of presenting the identification confirmation document, a process of presenting a message already issued to the user may be executed.

An encryption process using a secret key in the present embodiment may be substituted with an encryption process using a public key corresponding to a secret key. The encryption process using a public key may be substituted with a process of transmitting or restoring a secret key and an encryption process using the transmitted or restored secret key. Here, it is preferable that countermeasures for reducing a leakage risk of a transmitted secret key (encryption of a communication path or the like) is established.

The issuer's secret key may be generated from issuer's biometric information as follows, for example, instead of being stored in the issuer's secret key storage DB 901. In step S1101, the issuer's key generation unit 102 generates an issuer's template and an issuer's public key by acquiring the biometric information (registration biometric information for the issuer) from the issuer and executing a process similar to the user's key generation process in step S2202 on the registration biometric information for the issuer. The issuer's secret key storage DB 901 stores the generated issuer's template instead of the issuer's secret key.

In step S4911, the issuer's secret key storage DB 901 transmits the generated issuer's template to the issuance apparatus 400 instead of the issuer's secret key. In step S4403, the issuance proof generation unit 404 restores the issuer's secret key by acquiring again the biometric information (biometric information for issuer's secret key restoration) from the issuer and executing a process similar to the user's secret key restoration process of step S4502 on the biometric information for issuer's secret key restoration and the issuer template. The issuance proof generation unit 404 generates the issuance proof using the restored issuer's secret key.

As such, by generating the issuer's secret key from the issuer's biometric information, there is an effect that it is not necessary to store the issuer's secret key and the leakage risk of the issuer's secret key is reduced. Similarly, there is an effect that the verifier's secret key can also be generated from the verifier's biometric information and the leakage risk of the verifier's secret key is reduced by doing so. A part of the biometric information used to generate the issuer's secret key or the verifier's secret key may not necessarily be the same part of the biometric information used to generate the user's secret key.

### [Effects of Embodiment]

According to the embodiment, there is an effect that safety is maintained even when all the data stored by the user (specifically, the template, the encrypted message, the user's public key, and the issuance proof) can be leaked.

First, in the system such as ACS of the related art, when the data stored by the user is leaked, other parts of the presented partial message in the message are also leaked. On the other hand, in the message presentation system 10 according to the embodiment, even when the data stored by the user is leaked, it is difficult to decrypt the encrypted message if there is no biometric information of a legitimate user. Therefore, it is difficult to obtain information regarding a part other than the presented partial message in the message.

In the system such as ACS of the related art, when the data stored by the user is leaked, there is concern of an unauthorized user impersonating the user by using the user's secret key included in the data. On the other hand, in the message presentation system 10 according to the embodiment, even when the data stored by the user is leaked, it is difficult to restore the user's secret key if there is no biometric information of a legitimate user. Therefore, it is difficult for an unauthorized user to impersonate the user.

As such, safety is maintained even when all the data stored by the user (specifically, the template, the encrypted message, the user's public key, and the issuance proof) can be leaked. Thus, the data can be stored in an online location such as a data cloud storage and a terminal that is not necessarily restricted can be used as the presentation apparatus 600 to execute a process.

In a system in which safety is not maintained when the data stored by the user is leaked, countermeasures for strictly managing the data stored by the user (for example, in an offline) or countermeasures for storing a key used to execute encryption or decryption of the data stored by the user in a specific terminal and executing presentation only from the specific terminal is considered as the countermeasures for safety. However, such countermeasures have a problem that the user can execute the presentation process only from the specific terminal. Such problem is solved by the message presentation system 10 according to the embodiment.

When the presentation proof generation process of step S5605 is executed, the presentation proof generation unit 606 generates the presentation proof using data transmitted from the verification apparatus 700, and thus it is possible to reduce a risk of an attack in which a verifier impersonates the user and executes presentation to another verifier. By executing the template verification process of step S5604, it is possible to reduce a risk of falsification of the template. According to the specific example of each process, there is an effect that the safety is improved as described above.

The present invention is not limited to the above-described embodiments and includes various modifications. For example, the above-described embodiments have been described in detail to facilitate understanding of the present invention and the configurations described above may not be all included. Some of the configurations of a certain embodiment can be replaced with the configurations of another embodiment. Some of the configurations of a certain embodiment can be added to the configurations of another embodiment. Other configurations may be added to, deleted from, and replaced with some of the configurations of each embodiment.

Some or all of the above-described configurations, functions, processing units, processing means, and the like may be implemented as hardware by designing integrated circuits. The above-described configurations, functions, and the like may be implemented as software by causing a processor to analyze and execute a program that implements each function. Information such as a program, a table, or a file implementing each function can be stored in a storage device such as a memory, a hard disk, or a solid state drive (SSD) or a recording medium such as an IC card, a SD card, or a DVD.

The control lines or information lines indicate lines considered to be necessary for description and are not all the control lines and information lines necessary for products. Actually, substantially all the configurations may be connected to each other.

## Claims

1. A message presentation system comprising:
a presentation apparatus, wherein
the presentation apparatus
stores a template generated based on registration biometric information for a user, an encrypted message in which a message including one or more message elements are encrypted, and an issuance proof generated based on a user's public key corresponding to the template, the message, and an issuer's secret key corresponding to an issuance entity of the message,
acquires presentation biometric information for the user,
generates a user's secret key corresponding to the user's public key based on the template and the presentation biometric information,
restores the message by decrypting the encrypted message using the user's secret key,
generates a partial message from the message based on a presentation part that is information for identifying a part presented in the message,
generates a presentation proof based on the presentation part, the issuance proof, and the user's secret key, and
outputs the partial message and the presentation proof.

2. The message presentation system according to claim 1, further comprising:
a verification apparatus, wherein
the verification apparatus transmits a presentation challenge to the presentation apparatus, and
the presentation apparatus generates the presentation proof based on the presentation challenge, the presentation part, the issuance proof, and the generated secret key.

3. The message presentation system according to claim 1, further comprising:
a verification apparatus, wherein
the verification apparatus stores an issuer's public key corresponding to the issuer's secret key and the presentation part,
the presentation apparatus transmits the presentation proof to the verification apparatus, and
the verification apparatus verifies the presentation proof using the issuer's public key, the presentation part, and the partial message.

4. The message presentation system according to claim 1, wherein the presentation apparatus verifies whether the template is falsified based on a generation algorithm of the template and stops a process of generating the presentation proof when the verification fails.

5. The message presentation system according to claim 1,
wherein the presentation apparatus
is connected to an input device, and
acquires the presentation biometric information when input of an agreement for outputting the presentation part is received via the input device.

6. The message presentation system according to claim 5, wherein
the presentation apparatus generates data for outputting a display screen through which the input of the agreement is received, and
the display screen includes information indicating a message element of the presentation part.

7. The message presentation system according to claim 1, further comprising:
a log output apparatus, wherein
the log output apparatus
stores an encrypted log in which a log related to presentation of the presentation part presented by the presentation apparatus is encrypted with the user's public key or the user's secret key, and the template,
acquires log output biometric information for the user,
generates the user's secret key based on the template and the log output biometric information,
decrypts the encrypted log using the user's secret key, and
outputs the decrypted log.

8. The message presentation system according to claim 1, further comprising:
a verification apparatus configured to store a verifier's secret key, wherein
the presentation apparatus
stores a verifier's public key corresponding to the verifier's secret key, and
outputs the partial message that is encrypted with the verifier's public key to the verification apparatus.

9. The message presentation system according to claim 1, further comprising:
a DB, wherein
the issuance proof is generated based on the user's public key, a message for issuance process including the message, and the issuer's secret key,
the DB
stores an encrypted message for issuance process generated by dividing the message for issuance process into a plurality of parts and encrypting the parts, and
selects a part of the encrypted message for issuance process as the encrypted message and transmits the selected part to the presentation apparatus.

10. A presentation apparatus that presents a message, the presentation apparatus comprising:
a processor; and
a memory, wherein
the memory stores a template generated based on registration biometric information for a user, an encrypted message in which a message including one or more message elements are encrypted, and an issuance proof generated based on a user's public key corresponding to the template, the message, and an issuer's secret key corresponding to an issuance entity of the message,
the processor
acquires presentation biometric information for the user,
generates a user's secret key corresponding to the user's public key based on the template and the presentation biometric information,
restores the message by decrypting the encrypted message using the user's secret key,
generates a partial message from the message based on a presentation part that is information for identifying a part presented in the message,
generates a presentation proof based on the presentation part, the issuance proof, and the user's secret key, and
outputs the partial message and the presentation proof.

11. A message presentation method by a message presentation system, wherein
the message presentation system includes a presentation apparatus,
the presentation apparatus stores a template generated based on registration biometric information for a user, an encrypted message in which a message including one or more message elements are encrypted, and an issuance proof generated based on a user's public key corresponding to the template, the message, and an issuer's secret key corresponding to an issuance entity of the message,
the message presentation method includes
acquiring presentation biometric information for the user by the presentation apparatus,
generating a user's secret key corresponding to the user's public key based on the template and the presentation biometric information by the presentation apparatus,
restoring the message by decrypting the encrypted message using the user's secret key by the presentation apparatus,
generates a partial message from the message based on a presentation part that is information for identifying a part presented in the message by the presentation apparatus,
generates a presentation proof based on the presentation part, the issuance proof, and the user's secret key by the presentation apparatus, and
outputs the partial message and the presentation proof by the presentation apparatus.
